# EUROPEAN PATENT SPECIFICATION

(11) **EP 3 816 743 B1**
(45) Date of publication and mention of the grant of the patent: **02.12.2026**
(21) Application number: 20201904.8
(22) Date of filing: 14.10.2020
(51) Int. Cl.: G05B 19/042, G05B 19/418

(54) **AN INDUSTRIAL PROCESS CONTROL AND AUTOMATION SYSTEM HAVING DECOUPLED CONTROLLERS**
STEUERUNG INDUSTRIELLER PROZESSE UND AUTOMATISIERUNGSSYSTEM MIT ENTKOPPELTEN STEUERGERÄTEN
SYSTÈME INDUSTRIEL DE COMMANDE ET D'AUTOMATISATION DE PROCESSUS DOTÉ DE CONTRÔLEURS DÉCOUPLÉS

(30) Priority: 31.10.2019 US 201916669899
(43) Date of publication of application: 05.05.2021
(73) Proprietor: Honeywell International Inc., Charlotte, NC 28202 (US)
(72) Inventor: SCHREDER, James M., Charlotte, NC 28202 (US); MCLAUGHLIN, Paul F., Charlotte, NC 28202 (US); ROSA-BIAN, John J., Charlotte, NC 28202 (US); FELIX, Joseph P., Charlotte, NC 28202 (US)
(74) Representative: Houghton, Mark Phillip

(56) References cited:
- WO-A1-2007/053451
- WO-A1-2017/015182
- US-A1- 2007 100 471
- US-A1- 2016 299 497
- US-A1- 2017 163 444
- US-A1- 2017 357 253
- US-A1- 2018 024 542

## Description

### TECHNICAL FIELD

This disclosure relates generally to industrial process control and automation systems. More specifically, this disclosure relates to an industrial process control and automation system having its process controllers decoupled from the supervising layers of the system.

### BACKGROUND

Industrial process control and automation systems are often used to automate large and complex industrial processes. These types of systems routinely include various components including sensors, actuators, and process controllers. The process controllers receive measurements from the sensors and generate control signals for the actuators. A hallmark of a modern well-bred process control system is a well-integrated and uniform suite of operations from the systems application layers to the control and sensing of the various I/O devices. This control has been achieved by bundling a variety of networked devices such as servers for providing system applications such as, historians and advanced control applications, workstations using various human machine interface (HMI) solutions for operators of the control system, to switches, routers, firewalls, safety systems and proprietary real-time controllers and industrial field devices and other I/O elements. The integrated nature of such systems achieves a harmonized behavior of all the components, elements and application layers of the system. US 2018/024542 A1 relates to a method for comparing a master gold record with a live device in an industrial automation system. The method includes receiving a master golden record for a device of a plurality of devices in the industrial automation system. WO 2007/053451 A1 relates to a method including creating a plurality of function blocks. The function blocks are defined by at least one user. The method also includes identifying a plurality of data flows between the function blocks. US 2007/100471 A1 relates to an apparatus including a memory capable of storing information defining multiple function block types. A combination of instances of one or more function block types is capable of implementing a control process in a controller within a process control system. WO 2017/015182 A1 relates to a ground fault detector including a relay configured to receive a first current. The ground fault detector also includes a voltage regulator configured to provide a voltage potential to ground. US 2017/163444 A1 relates to a gateway which is configured to perform a method that includes receiving data from a first device using a first protocol. The first protocol is a cloud based protocol.

Many users of industrial process control and automation systems prefer one element, application or component from another and prefer that their favored components work and operate with several different process controllers, HMI solutions and applications. Many modern process control systems since the early 1990s have evolved from closed proprietary systems to more convenient connected and open systems. However, the open components for modern control systems have been focused to specific applications or networked communication protocols for such systems. Controllers and the general aspects of their programing, instructions and I/O and diagnostic behavior remain relatively closed and vendor specific in their operations.

### SUMMARY

This disclosure provides a system having its process controllers decoupled from the supervising layers of the system. The invention is as defined in the appended claims.

The invention relates to an industrial automation system including a controller having integrated repository and control functionality, as defined in the appended claims.

### BRIEF DESCRIPTION OF THE DRAWINGS

For a more complete understanding of this disclosure, reference is now made to the following description, taken in conjunction with the accompanying drawings in which:
FIGURE 1 illustrates an example industrial process control and automation system;
FIGURE 2 illustrates details of an example controller showing its internal components and functions, according to this disclosure;
FIGURE 3 illustrates the industrial process control system having decoupled process controllers in accordance with the disclosed embodiments; and
FIGURE 4 illustrates details of the internal components and functions of a decoupled process controller in accordance with disclosed embodiments.

### DETAILED DESCRIPTION

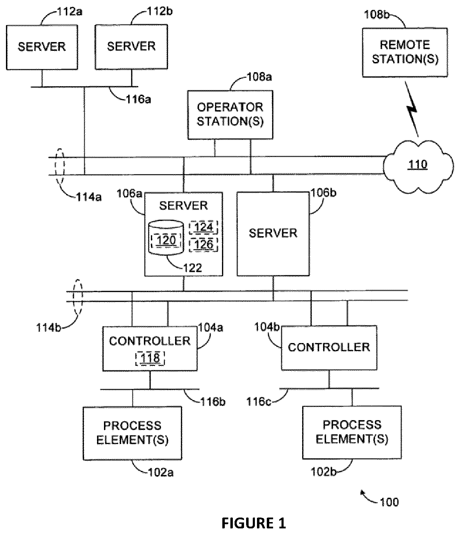

FIGURES 1-4 discussed below illustrate the principles of the invention as defined in the appended claims. Those skilled in the art will understand that the principles of the invention may be implemented in any type of suitably arranged device or system.

Distributed process control systems as they are constructed today, are integrated into layers of functional control each layer providing a system of control ranging from a local to an enterprise level of control. At a first level, process instruments and sensors are controlled through local controllers. Data from connected sensor and commands to the controllers are typically transmitted via a network to/from a supervisory control layer. The supervisory control layer uses supervisory servers to log information collected or generated by the controllers, such as status information related to the operation of the process elements. The servers could also execute applications that control the operation of the controllers, generate functional control blocks for executing control strategy, thereby controlling the operation of the process elements. One or more operator stations coupled to the servers provide user access to the servers which could then provide user access to the controllers and the process elements.

In the past, due to hardware, memory, processing power and bandwidth constraints the supervisory controllers, as well as engineering control services of a control system, required the use of dedicated servers to conduct these functions for the control system. The claimed embodiment includes a distributed control system architecture, that decouples the supervising layer and the supervisory servers from the process controllers, allowing the control applications and engineering databases to reside in a memory in the process controller thereby allowing the included imbedded processor of the process controllers to execute control over the process elements of the system.

FIGURE 1 illustrates a conventional distributed process control system architecture. This system is provided for background purposes and does not form part of the present invention. It is currently used to provide control of a manufacturing processes. The example of the process control system 100 shown in Figure 1 is for illustration only.

In this example the process control system 100 includes one or more process elements 102a-102b. The process elements 102a-I 02b represent components in a processing environment that perform any of a wide variety of functions. For example, the process elements 102a-l 02b could represent motors, valves, and other industrial equipment in a processing environment. The process elements 102a-102b could represent any other or additional components in a processing environment. Each of the process elements 102a- 102b includes any hardware, software, firmware, or combination thereof for performing one or more functions in a processing environment. The process elements 102a-l 02b could, for example, represent any component, device, or system capable of manipulating, altering, or otherwise processing one or more materials in a processing environment. Two process controllers 104a-104b are coupled to the process elements 102a-102b. The process controllers 104a-104b control the operation of the process elements 102a-102b. For example, the controllers 104a-104b typically provide control signals to the process elements 102a-102b. Each of the controllers 104a-104b includes any hardware, software, firmware, or combination thereof for controlling one or more process elements 102a-102b.

Two servers 106a-106b are coupled to the controllers 104a-104b. The servers 106a-106b perform various functions to provide supervisory support for the operation and control of the controllers 104a-104b and the process elements 102a-102b. For example, the servers 106a-106b could log information collected or generated by the controllers 104a-104b, such as status information related to the operation of the process elements 102a-102b. The servers 106a-106b could also execute applications that control the operation of the controllers 104a-104b, thereby controlling the operation of the process elements 102a-102b. In addition, the servers 106a-106b could provide secure access to the controllers 104a-104b. Each of the servers 106a-106b includes any hardware, software, firmware, or combination thereof for providing access to or control of the controllers 104a-104b. Each of the servers 106a-106b could, for example, include one or more processors and one or more memories capable of storing data and instructions used by the processors.

Due to memory limitations within controller products (such as purpose-built hardened controller platforms), control execution events are typically transmitted on a timely basis to a supervisory servers 106a-106b. Also, due to the nature of controller/server communications, there are times when a link or one or more of these platforms are not available. This may occur, for example, during redundant server failover, redundant controller failover, or interruption of a communication link between the controller and the server. The control events that are generated in a control execution environment are retained within the event buffer in the process controllers 104a-104b and sent to the supervisory server when the defined interruption no longer exists.

One or more operator stations 108a-108b are coupled to the servers 106a-106b. The operator stations 108a-108b represent computing or communication devices providing user access to the servers 106a-106b, which could then provide user access to the controllers 104a-104b and the process elements 102a-102b. For example, the operator stations 108a-108b could allow users to review the operational history of the process elements 102a-102b using information collected by the controllers 104a-104b and servers 106a-106b.

The operator stations 108a-108b could also allow the users to adjust the operation of the process elements 102a-102b, controllers 104a-104b, or servers 106a-106b. Each of the operator stations 108a-108b includes any hardware, software, firmware, or combination thereof for supporting user access and control of the system 100. Each of the operator stations 108a-108b could, for example, include one or more processors and one or more memories capable of storing data and instructions used by the processors.

In this example, at least one of the operator stations 108b is a remote station. The remote station is coupled to the servers 106a-106b through a remote network 110. The network 110 facilitates communication between various components in the system 100. For example, the network 110 may communicate Internet Protocol (IP) packets, frame relay frames, Asynchronous Transfer Mode (ATM) cells, or other suitable information between network addresses. The network 110 may include one or more local area networks (LANs), metropolitan area networks (MANs), wide area networks (WANs), all or a portion of a global network such as the Internet, or any other communication system or systems at one or more locations.

In this example, the system 100 includes two additional servers 112a-112b. The servers 112a-112b execute various applications to control the overall operation of the system 100. For example, the system 100 could be used in a processing or production plant or other facility, and the servers 112a-112b could execute applications used to control the overall operation of the plant or other facility. As particular examples, the servers 112a-112b could execute applications such as enterprise resource planning (ERP), manufacturing execution system (MES), or any other or additional plant or process control applications. Each of the servers 112a-112b includes any hardware, software, firmware, or combination thereof for controlling the overall operation of the system 100. Each of the servers 112a-112b could, for example, include one or more processors and one or more memories capable of storing data and instructions used by the processors.

As shown in Figure 1, the system 100 includes various redundant networks 114a-114b and single networks 116 a-116 c that support communication between components in the system 100. Each of these networks 114a-114b, 116a-116c represents any suitable network or combination of networks facilitating communication between components in the system 100. The networks 114a-114b, 116a-116c could, for example, represent Ethernet networks.

In one aspect of operation, control processes are implemented by the controllers 104a-104b, and the control processes are constructed using function blocks 118. The function blocks 118 represent executable software objects that perform specific tasks. Each function block 118 may also be represented graphically by a symbol and have specified parameters (such as one or more inputs and/or one or more outputs). To define a control process, a user may select particular function blocks 118 and link the inputs and outputs of the selected function blocks 118. The controllers 104a-104b could then implement the defined control process.

There may be any suitable type and number of function blocks 118 in the system 100. The function blocks 118 could, for example, include "component blocks" that represent basic functions. These basic functions could be combined into larger function blocks called "container blocks." "Stand-alone blocks" represent function blocks that do not contain component blocks and that are not contained within container blocks. These represent only examples of the types of function blocks 118 that may be used in the system 100. Other or additional types of function blocks 118 could be used in the system 100.

Different types of function blocks 118 are associated with different block definition files 120. A block definition file 120 defines various characteristics of an associated type of function block 118. For example, the block definition file 120 could define parameters (such as inputs and outputs) for a type of function block 118. The block definition file 120 could also define the symbol that graphically represents a type of function block 118. The block definition file 120 could further define a form layout for a type of function block 118, where the form layout is used later by a user to configure function blocks 118 for use in a control process.

In this example, the block definition files 120 are stored in a database 122. The database 122 includes any hardware, software, firmware, or combination thereof for storing and facilitating retrieval of information. The database 122 may use any of a variety of data structures, arrangements, and compilations to store and facilitate retrieval of information. In some embodiments, the database 122 represents an Engineering Repository Data Base (ERDB).

Control processes are constructed with the function blocks 118 using a process builder application 124. The process builder application 124 provides a graphical user interface that allows a user to create or edit control processes using the graphical symbols representing the types of function blocks 118. For example, the process builder application 124 may allow the user to select particular types of function blocks, which presents the graphical symbols representing the selected types of function blocks to the user. The user may then link the inputs and outputs of the selected types of function blocks. Instances of the selected function blocks types (the function blocks 118) may then be created and used to implement a control process. The process builder application 124 includes any hardware, software, firmware, or combination thereof for creating or editing control processes. The process builder application 124 could, for example, represent a CONTROL BUILDER application by HONEYWELL INTERNATIONAL, INC.

As noted above, conventional process control systems typically lack a mechanism for allowing users to create or edit function block types or the parameters associated with the function block types. In accordance with this disclosure, users have access to a function block editor 126. The block editor 126 provides a graphical user interface that allows a user to create or edit function block types and to create or edit parameters associated with function block types. For example, the block editor 126 may allow users to create, edit, or delete block definition files 120, which allows the users to control which types of function blocks 118 are transferred to the controllers 104a-104b for use in the process control system 100.

In particular embodiments, the block editor 126 may be used to create or edit custom algorithm function block types, custom data block types, and function block types for Foundation Fieldbus devices. Custom algorithm blocks contain user-defined algorithms and user-defined data structures. Custom data blocks support user-defined data parameters. Foundation Fieldbus blocks are used with devices supporting Foundation Fieldbus technology, which supports dynamic integration of dedicated field devices with digitally based control systems. Instances of these function block types defined by the users may then be incorporated into control processes using the process builder application 124. This represents only several examples of the types of function blocks that may be created, edited, or deleted using the block editor 126. The block editor 126 may be used to create, edit, or delete any other or additional types of function blocks. As a particular example, the block editor 126 could be used to create, edit, or delete proprietary function block types used within a system or controller.

The block editor 126 includes any hardware, software, firmware, or combination thereof for creating or editing function block types or their associated parameters. The block editor 126 could, for example, be implemented as an Active-X Control.

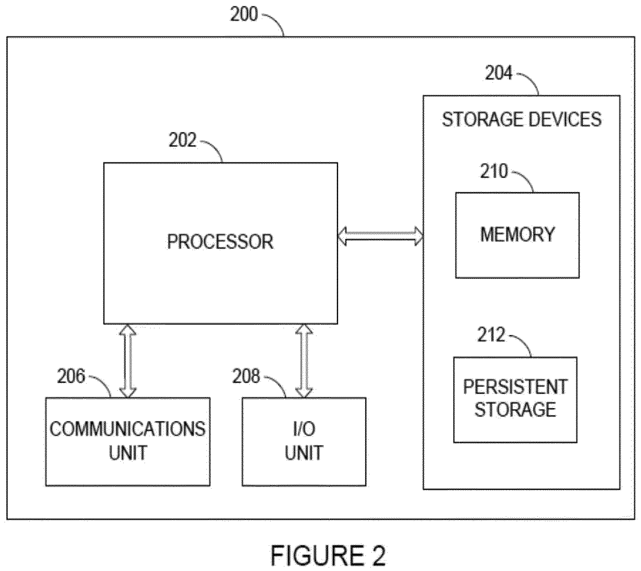

FIGURE 2 illustrates an example of a controller 200 according to this disclosure. The process controller 200 could represent, for example, either of the process controllers 104a-104b in Figure 1. However, the device 200 could be used in any other suitable system and could represent any suitable device in that system.

As shown in Figure 2, the controller 200 includes at least one processor 202, at least one storage device 204, at least one communications unit 206, and at least one input/output (I/O) unit 208. Each processor 202 can execute instructions, such as those that may be loaded into a memory 210. Each processor 202 denotes any suitable processing device, such as one or more microprocessors, microcontrollers, digital signal processors, application specific integrated circuits (ASICs), field programmable gate arrays (FPGAs), or discrete circuitry. The processor 202 would execute any suitable instructions, such as those implementing control and supervision of process elements 102a-102b.

The memory 210 and a persistent storage 212 are examples of storage devices 204, which represent any structure(s) capable of storing and facilitating retrieval of information (such as data, program code, and/or other suitable information on a temporary or permanent basis). The memory 210 may represent a random access memory or any other suitable volatile or non-volatile storage device(s). The persistent storage 212 may contain one or more components or devices supporting longer-term storage of data, such as a read only memory, hard drive, flash memory, or optical disc. In the present disclosure, persistent storage 212 includes databases 230 and 240 that includes any hardware, software, firmware, or combination thereof for storing and facilitating retrieval of information. Databases 230, and 240 may use any of a variety of data structures, arrangements, and compilations to store and facilitate retrieval of information.

A communication unit 206 supports communications with other systems or process instruments and devices. For example, at least one communication unit 206 could include one or more wired communication networks that support data communications through any suitable physical or communication link(s) using any number or form of communication protocols for communicating with process instruments, such as FOUNDATION FIELDBUS, HART, PROFIBUS and MODBUS. The communication unit 206 also connects the controller 200 to data communication networks, such as networks 114a-114b that support communication between components in the system 100.

An I/O unit 208 allows for input and output of data and commands to a network. For example, unit 206 may provide a connection for user input of an operator station through a keyboard, mouse, keypad, touchscreen, or other suitable input device. The unit 206 may also send output to a display, printer, or other suitable output device.

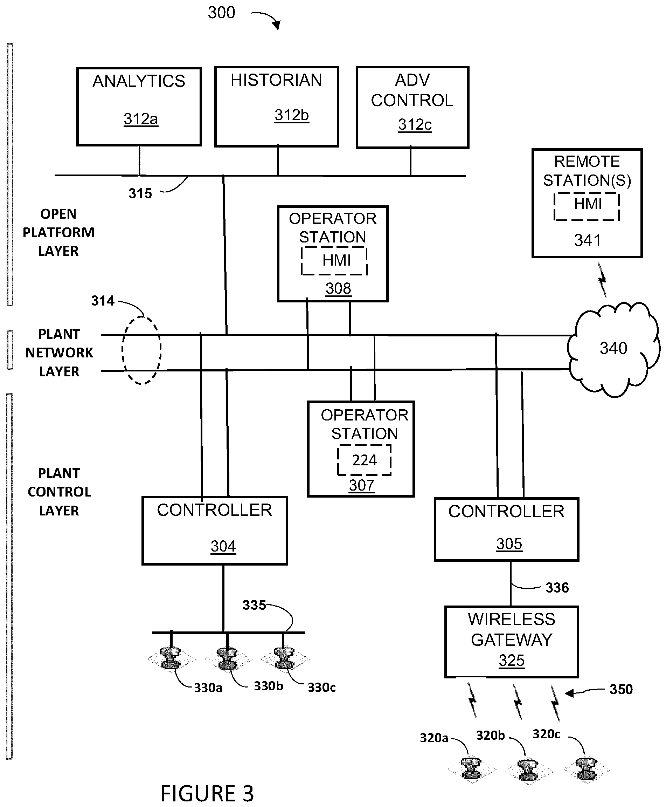

FIGURE 3 illustrates the components of an industrial automation system architecture having decoupled controllers in accordance to one or more embodiments. As shown in FIGURE 3, the industrial automation system 300 is organized into three primary layers, an Open Platform Layer, a Plant Network Layer, and a Plant Control Layer. The Plant Control Layer may include one or more process instruments or devices such as sensors, actuators, flow meters, pressure and temperature transmitters and other devices that operate in a processing facility, as well as, controllers, and wireless gateways. Controller 304 provides both local and supervisory control over one or one more wired process instruments or devices, 330a-330c, over a wired network 335 operating under one or more bus protocols, such as FOUNDATION FIELDBUS, PROFIBUS, HART or MODBUS. The controller 304 could be a single controller or a dual redundant pair of controllers operating in a single or dual redundant network configuration.

Controller 305 provides local and supervisory control over one or more wireless process instruments or devices 320a-320c via a wireless gateway device 325. Wireless Gateway 325 sends and receives data wirelessly using a wireless network 350 to wireless process instruments or devices 320a-320c using a one or more industrial wireless communication protocols, such as WirelessHART, and ISA100. Controller 305 could also be a single controller or a dual redundant pair of controllers, operating in a single or dual redundant network configuration.

The Network Layer 314 may include any suitable wired or wireless network, such as, for example, a local area network (LAN), wide area network (WAN), Ethernet, wireless fidelity (WiFi), IEEE 802. 11 or ISA100. As a particular example, the network 314 in this embodiment represents a redundant pair of Ethernet networks, such as a FAULT TOLERANT ETHERNET (FTE) network from HONEYWELL INTERNATIONAL INC.

The plant network layer can also be connected to a cloud network 340 and to one or more remote operator stations 341. The remote station 341 is coupled to the plant network layer 314 via a cloud network 340. The cloud network 340 facilitates communication between various components in the system 300, including controllers 304, 305, modules 312a-312c and operator stations 307, 308. For example, the network 340 may communicate Internet Protocol (IP) packets, frame relay frames, Asynchronous Transfer Mode (ATM) cells, or other suitable information between network addresses. The cloud network 340 may include one or more local area networks (LANs), metropolitan area networks (MANs), wide area networks (WANs), all or a portion of a global network such as the Internet, or any other communication system or systems at one or more locations. Additionally, cloud network 340 can also support and any open data communication protocol such as an OPC UA (Open Platform Connectivity Unified Architecture) data protocol and its core services for synchronous and asynchronous data publication, alarms and event publication, history data transfer, and the like.

The Open Platform Layer includes at least an analytics module 312 a, a historian module 312b and an advanced control module 312c as well as an operator station 308 running any suitable HMI software application. The modules 312a-312c provide various functions to the overall operation of the system 300. For example, the analytics module 312 a could be used to provide tools for predictive analytics, to delivers insights about future performance, based on historical data. The historian module 312 b serves as a repository for process data from the controllers 304, 305 process instruments and devices 330a-330c, 320a-320c of system 300. The historical data stored in the historian 312b can be retrieved by the other modules of the open platform layer as well as operator station 308 and remote station 341 via cloud network 340. For example, the historical data could be used as the basis for predictive analytics and also in developing advanced software models by the Advanced Control Module 312 c. Advanced control module 312c is tasked in implementing model predictive control (MPC) or other advanced predictive control (APC) models that can be sent to one or more controllers to control process instruments and other equipment using the models and predictions developed by module 312c. Each of the modules 312a-312c includes any hardware, software, firmware, or combination thereof for controlling the overall operation of the system. Each module 312a-312c of the Open Platform Layer can be configured as single or multiple server platforms and could include, for example, one or more processors and one or more memories capable of storing data and instructions used by the processors. Even though FIGURE 3, illustrates that modules 312a-312c are connected locally in the plant via the plant network 314, modules 312a-321c could also be located in a remote location and connected to system 300 via cloud network 340.

The Open Platform Layer also includes an Operator Station 308. The station 308 represents computing or communication devices providing user access to the components and devices of the system 300. For example, the operator stations 308 could allow users to review on an included display, the operational history of the process instruments and devices stored in historian 312b and collected by controllers 304 and 305. It can also execute software programs to allow a user to run "pattern-based discovery and predictive-process analytics", with the data from the analytics module 312a.

The Operator Station 308 uses a human machine interface (HMI) software application to allow overall user communication and control of system 300. The HMI represents a software application that is tasked to provide user access to the Open Platform Layer and its modules, as well as access to the Plant Control Layer and its controllers, process instruments and devices. For example, the HMI could allow users and the operators of the system 300, to adjust the operation of the process instruments and devices and controllers. The HMI would include any hardware, software, firmware, or combination thereof for supporting user access and control of the system 300. The HMI could, for example, provide advanced process control from the advanced control module implementing model predictive control (MPC) or other advanced predictive control (APC) to one or more controllers to control process instruments and other equipment using the models and predictions developed by the advanced control module in real-time.

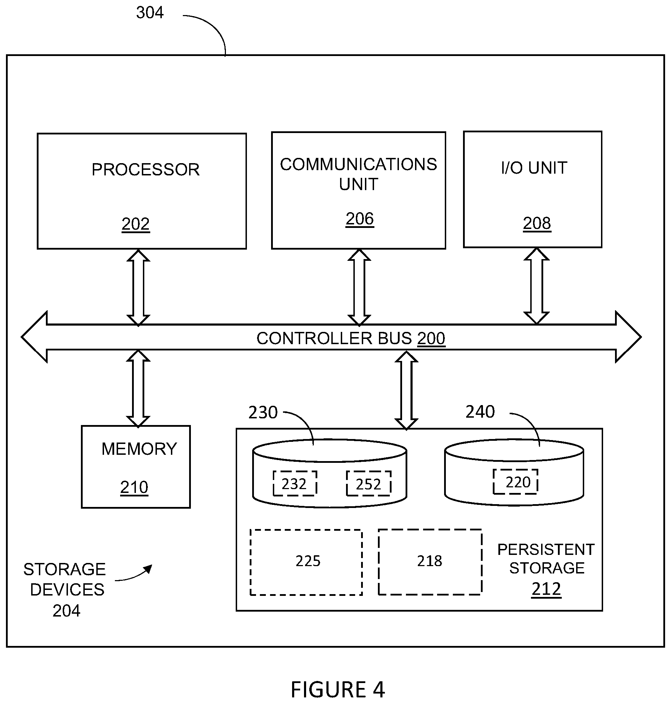

Turning to FIGURE 4, the controller 304 of the disclosure is illustrated. For the purpose of this embodiment, controller 304 will be used to explain the operation of a decoupled controller. Controller 305 is also a decoupled controller and includes the same internal components and operates in the same manner as controller 304. Controller 304 includes a processor 202, memory 210, storage devices 204, I/O unit 208, communication unit 206 and controller bus 200. Controller Bus 200 provides a unified bidirectional high-speed system bus that provides data, address and memory connectivity to components and devices of controller 304. The communication unit 206 supports data communication with other systems and process instruments and devices 330a-330c via a network bus 335 employing any suitable bus protocol, such as, FOUNDATION FIELDBUS, PROFIBUS, HART or MODBUS. Communication unit 206 also provides network data communication to the platform layer via network 314 to user operated input/output devices such as data terminals, displays, printers or other suitable communication devices, such as operator stations 307, 308 and remote station 341.

The processor 202 of controller 304 can run command and control applications, stream and batch analytics, and send device generated telemetry data to the Open Platform Layer via communication unit 206 and plant network 314. Similarly, data originating in the Open Platform Layer may be sent to the process instruments and devices, for example devices 330a-330c through controller 304, such as for example, MPC and APC control and command data and instructions to the connected devices and sensors.

The controller 304 of the present embodiment includes an open protocol data communication and security software application 225 stored in persistent storage 212, that operates as a common protocol machine, arranged to deliver downstream connectivity to the Plant Control Layer and other devices and systems using open communication protocols. Also, open protocol data communication and security software 225 it is arranged to provide upstream connectivity to modules 312a-312c, operator stations 308 and other devices of the Open Platform Layer connected to Plant Network 314 as well as any remote stations or other devices connected to cloud network 340. Data collected from the downstream protocols is mapped to a unifying abstraction layer that provides a consistent namespace and data services for information publication to the modules 312a-312c and operator station 308 associated with the Open Platform Layer.

In the past, each software or application developer needed to write a custom interface (or server/driver) to exchange data with hardware process instruments and devices. The industrial open protocol standards replaced this practice by providing a common interface that permits this work to be done once, and then easily reused by HMI and custom applications.

For example, the Open Platform Connectivity (OPC) specification is based upon the Microsoft. Object linking and embedding OLE (now ActiveX), Component Object Model (COM), and Distributed Component Object Model (DCOM) technologies. DCOM provides a set of interfaces allowing clients and servers to communicate within the same computer running a compatible operating system. OPC defines a standard set of interfaces, properties, and methods for use in process control, manufacturing, and automation applications. These applications include distributed control systems, programmable logic controllers, input/output (IO) systems, smart field devices, and other servers of real-time information. The ActiveX/COM technologies define how individual software components interact and share data. By using the Microsoft Visual Basic object-oriented component, OLE Automation, OPC can provide office applications with plant floor data via local area networks (LANs), remote sites, or the Internet.

OPC protocol provides many benefits to end users and hardware and software manufacturers, including open connectivity, high performance, and improved vendor productivity and security. OPC provides open connectivity giving users a choice among a wider variety of plant floor devices and client software, allowing better utilization of best-in-breed applications. Because OPC is an open standard, software and hardware manufacturers devote less time to connectivity issues and more time to application issues, eliminating significant duplicate effort. OPC fosters greater interoperability between automation and control applications, field devices, and business and office applications. Other open protocols data communication protocols can be used to communicate in system 300 including, for example, Ethernet/IP, ProfiNet, IEC-61850, Modbus/TCP, HART/IP, and the like.

Processor 202 uses a communication stack that supports an Open Platform Connectivity Unified Architecture (OPC UA) data protocol and its core services for synchronous and asynchronous data publication, alarms and event publication, history data transfer, blind record or "BLOB" transfer, and the like. The OPC UA architecture is platform and operating system independent because it does not depend on DCOM technology to communicate between the components of the system. OPC UA further includes security features including encryption and certificate-based authentication. The security services are available for the platform, the network connections and the control layer its device providing secure guard traffic flow bi-directionally to protect both the open platform layer modules and operator stations and the plant control layers systems and devices. Other open platform protocols can be supported as an alternative to or in addition to OPC UA.

The claimed embodiment decouples the supervising layer and the supervisory servers 106a-106b from the process controllers 304, 305. The control applications, engineering databases and names and name services formerly residing in supervisory servers 106a-106b now reside in a persistent storage 212 of controller 304. Persistent storage 212 includes databases 230 and 240 that includes any hardware, software, firmware, or combination thereof for storing and facilitating retrieval of information.

Database 230 performs the functions of the supervisory servers 106a-106b. In this embodiment, database 230 acts as a system repository configured to log information collected or generated by the controller 304 such as status information related to the operation of the process devices into a memory file 232. The information collected and stored in memory file 232 is uploaded to the network 314 via communication unit 206 for storage and use by modules 312a-312b and access by operator station 308.

A names and name service is provided by an executable software application 252 and also stored in system repository database 230 along with the supporting translation library for this service. The names and names service application 252, provides plain text name references used directly with controller 304 to access control objects or other configuration data without the use of specific control object identifiers. For example, a library of controller objects and functions is maintained in a database 230 that supports the operation of the controller 304, such as, function block, algorithm, process, or any other executable element. Additionally, the name and names service can support use of plain text messaging to access, alarm functions, property/parameter, tags and improved control functions for the process instruments and devices connected to the controller 304. The translation library is built on the control execution environment of controller 304.

Database 240 stores executable software applications that control the operation of the controllers and contain function block definitions 220 for functional control blocks 218. Function blocks 218 execute control strategy, thereby controlling the operation of the process instruments and devices connected to controller 304. As was explained in FIGURE 1, the function blocks 218 represent executable software objects that perform specific tasks. Each function block 218 may also be represented graphically by a symbol and have specified parameters (such as one or more inputs and/or one or more outputs). To define a control process, a user may select particular function blocks 218 and links the inputs and outputs of the selected function blocks 218.

There may be any suitable type and number of function blocks 218 stored in persistent memory 212. The function blocks 218 could, for example, include "component blocks" that represent basic functions. These basic functions could be combined into larger function blocks called "container blocks." "Stand-alone blocks" represent function blocks that do not contain component blocks and that are not contained within container blocks. These represent only examples of the types of function blocks 218 that may be used by controllers 304.

Different types of function blocks 218 are associated with different block definition files 220. A block definition file 220 defines various characteristics of an associated type of function block 218. For example, the block definition file 220 stored in database 240 could define parameters (such as inputs and outputs) for a type of function block 218. The block definition file 220 could also define the symbol that graphically represents a type of function block 218. The block definition file 220 could further define a form layout for a type of function block 218, where the form layout is used later by a user to configure function blocks 218 for use in a control process.

In this embodiment, the block definition files 220 are stored in the database 240. The database 240 includes any hardware, software, firmware, data structures or arrangements or combination thereof for storing and facilitating retrieval of information. In some embodiments, the database 240 represents an Engineering Repository Database (ERDB).

In the system 100 example of FIGURE 1, control instructions are constructed for function blocks 118 using a process builder application 124 maintained in the supervisory server 106a-106b. The process builder application 124 provides a graphical user interface that allows a user to create or edit control processes using graphical symbols representing the types of function blocks 118. For example, the process builder application 124 may allow the user to select particular types of function blocks, which presents the graphical symbols representing the selected types of function blocks to the user. The user may then link the inputs and outputs of the selected types of function blocks. Instances of the selected function blocks types (the function blocks 118) may then be created and used to implement a control process. The process builder application 124 includes any hardware, software, firmware, or combination thereof for creating or editing control processes. The process builder application 124 could, for example, represent a CONTROL BUILDER application by HONEYWELL INTERNATIONAL, INC.

However, in the embodiment of system 300, an operator station 307 is used to connect controller 304 to a process builder application 224 executing in operator station 307. A user can use the process builder application 224 to create or edit function blocks 218 using the data stored in ERDB 220. The process builder application 224 could allow users to create, edit, or delete block definition files 220, thereby controlling which types of function blocks 218 are used by controller 304. The operator station 307 and process builder application 224 connects to controller 304 via the network layer 314.

Data communication and security application software stored in persistent storage 225 provides core security for equipment controllers 304 of the Plant Control Layer. The open protocol application 225 works in conjunction with communication unit 206 to perform deep packet inspection of incoming traffic from network 314 and operator station 307 as well as from operator station 341 and the network 314 via the cloud network 340.

Since each controller 304 in the Plant Control Layer includes an open protocol communication and security application 225 the controllers can provide flexible scalability and deployment within the plant control layer using the Plant Network Layer 314. For example, new controllers and other control devices can be added to the Plant Control Layer by connecting the controllers and devices to network 314 without the need of configuring supervisory servers to handle new devices. The open standard internal protocol (IP) based industrial or commercial protocol decouples the controllers from the supervisory system thereby rendering each controller independent of any supervising device or server. For example, the controller 304 of the present embodiment can be integrated into an industrial plants control layer and operated from operator station 308 HMI via network 314. Upstream and downstream data handling and security is accomplished by the open protocol application 225 connecting controller 304 to the HMI using at least one open protocol such as Ethernet/IP, OPC UA, ProfiNet, IEC-61850, Modbus/TCP, HART/IP, and the like.

Additionally, the plant control layer and controller 304 using at least one open data communication and security protocol can operate in a hybrid configuration able to communicate to devices and operator stations on network 314 as well as to devices and remote stations operating using open platform protocol connected via cloud network 340.

Although FIGURE 4 illustrates one example of a decoupled controller 304, various changes may be made to FIGURE 4. For example, the controller 304 components and functions could come in a wide variety of configurations. The controller 304 shown in FIGURE 4 is meant to illustrate one example and type of a decoupled controller and does not limit this disclosure to any particular type of controller configuration.

Controller 305 operates in the similar manner as controller 304, however, as is illustrated in FIGURE 3, controller 305 is connected via a wired network connection 336 to a wireless gateway 325. The wireless gateway 325 includes a least one wireless radio device that operates using an industrial wireless protocol, such as for example, WirelessHART or ISA100. The wireless gateway 325 transmits data and command signals via a wireless network 350 to wireless process instruments 320a-320c. Sensor and process data in turn are transmitted from the wireless process instruments 320a-320c to the wireless gateway 325 via wireless network 350. The wireless gateway transmits the data received on the wireless network 350 via network connection 336 to controller 305 for processing by the open platform layer.

In some embodiments, various functions described in this patent document are implemented or supported by a computer program that is formed from computer. This embodiment contemplates a distributed control system architecture that decouples the supervising layer and the supervisory servers from the process controllers, allowing the control applications and engineering databases to reside in a memory in the process controller thereby allowing the included imbedded processor of the process controllers to execute control over the process elements of the system, readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims. Moreover, none of the claims is intended to invoke 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. within the scope of protection as defined by the claims

## Claims

1. An industrial automation system (300) being organized in three primary layers, an open platform layer, a plant network layer, and a plant control layer, wherein the plant control layer includes one or more process instruments, the system further includes at least one apparatus (304) configured to control at least one of the process instruments using an open platform data communication protocol, the apparatus comprising;
a processor (202) and a memory (204);
a communications interface (206) connected to the at least one process instrument (330a-330c), the communication interface arranged to transmit instructions to and receive data from the at least one process instrument and to a data network (314) associated with the system, the communication interface (206) arranged to communicate using the open platform data communication protocol;
the apparatus further comprising:
a system repository file (232) stored in the memory containing process data information sent to the apparatus from the at least one process instrument;
a function block definition file (218) stored in the memory containing function blocks that define a control strategy for controlling the at least one process instrument;
an engineering repository file (220) stored in the memory containing the characteristics and parameters for the function blocks associated with the at least one process instrument;
an open protocol data communication and security software application (225) being configured to operate as a common protocol machine, arranged to deliver downstream connectivity to the plant control layer and upstream connectivity to modules (312 a-312a), operator stations (308) and other devices of the open platform layer
and the open protocol data communication and security application software 225 being further configured to provide core security for apparatus 304 and Plant Control Layer
wherein the processor (202) operates to communicate the process data from the system repository file (232) using the open platform data communication protocol and operates to receive instructions to execute the control strategy.

2. The system of Claim 1, wherein the memory is a persistent storage device (212).

3. The system of Claim 2, wherein the persistent storage device (212) includes a system repository database (230) containing the system repository file (232), the system repository database (230) storing and logging the information collected or generated by the apparatus (304) related to the operation of the at least one process instrument; and
a names and name software application (252) that includes a names and name service for providing plain text name references used by the apparatus to access function block control objects or other configuration data.

4. The system of Claim 2, wherein the persistent storage device (212) includes an engineering repository database (240) containing the engineering repository file (220) the engineering repository database (240) storing block definition files that define the characteristics of an associated function block.

5. The system of Claim 2, wherein the persistent storage device (212) includes a data communication and security software application (225) that manages the open platform data communication protocol, the data communication and security software application including a communication stack used by the processor (202) to support an OPC UA open platform data communication protocol.

6. The system of Claim 1, wherein the operator station (308) includes an HMI to allow overall user communication and control of the system and to receive data from the at least one controller to manage the operation of the at least one controller and process instrument.

7. The system of Claim 1, wherein the data network (314) is connected to a cloud network (340) and to at least one remote operator station (341).

8. The system of Claim 1, wherein a second operator station (307) is connected to the data network (314), the second operator station including a process builder software application (224) that is operated by a user to create and edit the function blocks defined in the function block file (218) using the data stored in engineering repository database (240).

## Patentansprüche

1. Industrielles Automatisierungssystem (300), das in drei primären Schichten organisiert ist, einer offenen Plattformschicht, einer Anlagennetzwerkschicht und einer Anlagensteuerschicht, wobei die Anlagensteuerschicht ein oder mehrere Prozessinstrumente beinhaltet, das System ferner mindestens eine Einrichtung (304) beinhaltet, die dazu konfiguriert ist, mindestens eines der Prozessinstrumente unter Verwendung eines offenen Plattform-Datenkommunikationsprotokolls zu steuern, die Einrichtung umfassend:
einen Prozessor (202) und einen Speicher (204);
eine Kommunikationsschnittstelle (206), die mit dem mindestens einen Prozessinstrument (330a-330c) verbunden ist, wobei die Kommunikationsschnittstelle dazu angeordnet ist, Anweisungen an das mindestens eine Prozessinstrument und an ein dem System zugeordnetes Datennetzwerk (314) zu übertragen und von diesen zu empfangen, wobei die Kommunikationsschnittstelle (206) dazu angeordnet ist, unter Verwendung des offenen Plattform-Datenkommunikationsprotokolls zu kommunizieren;
die Einrichtung ferner umfassend:
eine in dem Speicher gespeicherte System-Repository-Datei (232), die Prozessdateninformationen enthält, die von dem mindestens einen Prozessinstrument an die Einrichtung gesendet werden;
eine in dem Speicher gespeicherte Funktionsblockdefinitionsdatei (218), die Funktionsblöcke enthält, die eine Steuerstrategie zum Steuern des mindestens einen Prozessinstruments definieren;
eine in dem Speicher gespeicherte Technik-Repository-Datei (220), die Eigenschaften und Parameter für die dem mindestens einen Prozessinstrument zugeordneten Funktionsblöcke enthält;
eine Offenes-Protokoll-Datenkommunikations- und Sicherheitssoftwareanwendung (225), die dazu konfiguriert ist, als eine gemeinsame Protokollmaschine betrieben zu werden, die dazu angeordnet ist, eine nachgelagerte Konnektivität mit der Anlagensteuerschicht und eine vorgelagerte Konnektivität mit Modulen (312a-312a), Bedienerstationen (308) und anderen Vorrichtungen der offenen Plattformschicht zu leisten
und wobei die Offenes-Protokoll-Datenkommunikations- und Sicherheitsanwendungssoftware 225 ferner dazu konfiguriert ist, eine Kernsicherheit für die Einrichtung 304 und die Anlagensteuerschicht bereitzustellen
wobei der Prozessor (202) dazu betrieben wird, die Prozessdaten aus der System-Repository-Datei (232) unter Verwendung des offenen Plattformdatenkommunikationsprotokolls zu kommunizieren und dazu betrieben wird, Anweisungen zu empfangen, die Steuerstrategie auszuführen.

2. System nach Anspruch 1, wobei der Speicher eine dauerhafte Speichervorrichtung (212) ist.

3. System nach Anspruch 2, wobei die dauerhafte Speichervorrichtung (212) eine System-Repository-Datenbank (230) beinhaltet, die die System-Repository-Datei (232) enthält, wobei die System-Repository-Datenbank (230) die von der Einrichtung (304) in Bezug auf den Betrieb des mindestens einen Prozessinstruments gesammelten oder erzeugten Informationen speichert und aufzeichnet; und
eine Namen-und-Name-Softwareanwendung (252), die einen Namen-und-Name-Dienst zum Bereitstellen von Nur-Text-Verweisen beinhaltet, die von der Einrichtung verwendet werden, um auf Funktionsblocksteuerobjekte oder andere Konfigurationsdaten zuzugreifen.

4. System nach Anspruch 2, wobei die dauerhafte Speichervorrichtung (212) eine Technik-Repository-Datenbank (240) beinhaltet, die die Technik-Repository-Datei (220) enthält, wobei die Technik-Repository-Datenbank (240) Blockdefinitionsdateien speichert, die die Eigenschaften eines zugeordneten Funktionsblocks definieren.

5. System nach Anspruch 2, wobei die dauerhafte Speichervorrichtung (212) eine Datenkommunikations- und Sicherheitssoftwareanwendung (225) beinhaltet, die das offene Plattformdatenkommunikationsprotokoll verwaltet, wobei die Datenkommunikations- und Sicherheitssoftwareanwendung einen Kommunikationsstapel beinhaltet, der von dem Prozessor (202) dazu verwendet wird, ein OPC UA offenes Plattformdatenkommunikationsprotokoll zu unterstützen.

6. System nach Anspruch 1, wobei die Bedienerstation (308) eine HMI beinhaltet, um eine übergreifende Benutzerkommunikation und -steuerung des Systems zu ermöglichen und Daten von der mindestens einen Steuerung zu empfangen, um den Betrieb der mindestens einen Steuerung und des Prozessinstruments zu verwalten.

7. System nach Anspruch 1, wobei das Datennetzwerk (314) mit einem Cloud-Netzwerk (340) und mit mindestens einer entfernten Bedienerstation (341) verbunden ist.

8. System nach Anspruch 1, wobei eine zweite Bedienerstation (307) mit dem Datennetzwerk (314) verbunden ist, wobei die zweite Bedienerstation eine Prozesseditorsoftwareanwendung (224) beinhaltet, die durch einen Benutzer dazu betrieben wird, die in der Funktionsblockdatei (218) definierten Funktionsblöcke unter Verwendung der in der Technik-Repository-Datenbank (240) gespeicherten Daten zu erstellen und zu bearbeiten.

## Revendications

1. Système d'automatisation industrielle (300) étant organisé en trois couches principales, une couche de plateforme ouverte, une couche de réseau d'installation, et une couche de commande d'installation, dans lequel la couche de commande d'installation inclut un ou plusieurs instruments de procédé, le système incluant en outre au moins un appareil (304) configuré pour commander au moins l'un des instruments de procédé en utilisant un protocole de communication de données de plateforme ouverte, l'appareil comprenant :
un processeur (202) et une mémoire (204) ;
une interface de communication (206) connectée à l'au moins un instrument de procédé (330a-330c), l'interface de communication étant agencée pour transmettre des instructions à l'au moins un instrument de procédé et à un réseau de données (314) associé au système, et pour recevoir des données depuis ceux-ci, l'interface de communication (206) étant agencée pour communiquer en utilisant le protocole de communication de données de plateforme ouverte ;
l'appareil comprenant en outre :
un fichier de référentiel système (232) stocké dans la mémoire contenant des informations de données de procédé envoyées à l'appareil depuis l'au moins un instrument de procédé ;
un fichier de définition de bloc fonctionnel (218) stocké dans la mémoire contenant des blocs fonctionnels qui définissent une stratégie de commande pour commander l'au moins un instrument de procédé ;
un fichier de référentiel d'ingénierie (220) stocké dans la mémoire contenant les caractéristiques et paramètres pour les blocs fonctionnels associés à l'au moins un instrument de procédé ;
une application logicielle de communication de données et de sécurité à protocole ouvert (225) étant configurée pour fonctionner comme une machine à protocole commun, agencée pour fournir une connectivité en aval à la couche de commande d'installation et une connectivité en amont à des modules (312a-312a), des postes opérateur (308) et d'autres dispositifs de la couche de plateforme ouverte
et le logiciel d'application de communication de données et de sécurité à protocole ouvert 225 étant en outre configuré pour fournir une sécurité de base pour l'appareil 304 et la couche de commande d'installation
dans lequel le processeur (202) fonctionne pour communiquer les données de procédé depuis le fichier de référentiel système (232) en utilisant le protocole de communication de données de plateforme ouverte et fonctionne pour recevoir des instructions pour exécuter la stratégie de commande.

2. Système de la revendication 1, dans lequel la mémoire est un dispositif de stockage persistant (212).

3. Système de la revendication 2, dans lequel le dispositif de stockage persistant (212) inclut une base de données de référentiel système (230) contenant le fichier de référentiel système (232), la base de données de référentiel système (230) stockant et journalisant les informations collectées ou générées par l'appareil (304) relatives au fonctionnement de l'au moins un instrument de procédé ; et
une application logicielle de noms et de nom (252) qui inclut un service de noms et de nom destiné à fournir des références de noms en texte brut utilisées par l'appareil pour accéder à des objets de commande de bloc fonctionnel ou à d'autres données de configuration.

4. Système de la revendication 2, dans lequel le dispositif de stockage persistant (212) inclut une base de données de référentiel d'ingénierie (240) contenant le fichier de référentiel d'ingénierie (220) la base de données de référentiel d'ingénierie (240) stockant des fichiers de définition de bloc qui définissent les caractéristiques d'un bloc fonctionnel associé.

5. Système de la revendication 2, dans lequel le dispositif de stockage persistant (212) inclut une application logicielle de communication de données et de sécurité (225) qui gère le protocole de communication de données de plateforme ouverte, l'application logicielle de communication de données et de sécurité incluant une pile de communication utilisée par le processeur (202) pour prendre en charge un protocole de communication de données de plateforme ouverte OPC UA.

6. Système de la revendication 1, dans lequel le poste opérateur (308) inclut une IHM pour permettre une communication et une commande globales de l'utilisateur du système et pour recevoir des données depuis l'au moins un contrôleur afin de gérer le fonctionnement de l'au moins un contrôleur et instrument de procédé.

7. Système de la revendication 1, dans lequel le réseau de données (314) est connecté à un réseau en nuage (340) et à au moins un poste opérateur distant (341).

8. Système de la revendication 1, dans lequel un deuxième poste opérateur (307) est connecté au réseau de données (314), le deuxième poste opérateur incluant une application logicielle de construction de procédé (224) qui est actionnée par un utilisateur pour créer et modifier les blocs fonctionnels définis dans le fichier de bloc fonctionnel (218) en utilisant les données stockées dans la base de données de référentiel d'ingénierie (240).
